# EUROPÄISCHE PATENTANMELDUNG

(11) **EP 3 618 204 A1**
(43) Veröffentlichungstag der Anmeldung: **04.03.2020**
(21) Anmeldenummer: 18190980.5
(22) Anmeldetag: 27.08.2018
(51) Int. Cl.: H01R 39/08, H01R 39/02

(54) **SCHLEIFRINGKÖRPER**

(71) Anmelder: Siemens Aktiengesellschaft, 80333 München (DE)
(72) Erfinder: Binder, Herbert, 94127 Neuburg (DE); Gruber, Robert, 94099 Ruhstorf (DE); Memminger, Oliver, 94127 Neuburg a. Inn (DE); Oberneder, Manuel, 94124 Büchlberg (DE); Schifferer, Klaus, 94127 Neuburg am Inn (DE)

(57) **Zusammenfassung**

Vorgeschlagen wird ein Schleifringkörper (1) zur elektrischen Kontaktierung einer Asynchronmaschine, umfassend wenigstens einen ersten Schleifring (2) und einen zweiten Schleifring (3), an denen jeweils wenigstens zwei Leiterstäbe (11a, 11b, 12a, 12b, 13a, 13b, 21a, 21b, 24a, 24b, 32a, 32b, 34a, 34b, 42) befestigt sind, wobei die wenigstens zwei Schleifringe (2, 3) starr miteinander verbunden sind, und wobei wenigstens einer der Schleifringe (2, 3) wenigstens eine Schleifring (14, 15, 16, 17, 18, 19) aufweist, die zu einer Durchführung der Leiterstäbe (11a, 11b, 12a, 12b, 13a, 13b, 21a, 21b, 24a, 24b, 32a, 32b, 34a, 34b, 42) des wenigstens einen anderen Schleifrings (2, 3) ausgebildet ist. Der Schleifringkörper (1) ist dadurch gekennzeichnet, dass der wenigstens eine Schleifring (2, 3), der die wenigstens eine Ausnehmung (14, 15, 16, 17, 18, 19, 23, 26, 27, 28, 29, 30, 37, 43, 44, 45) aufweist, in einem Bereich um die Ausnehmung (14, 15, 16, 17, 18, 19, 23, 26, 27, 28, 29, 30, 37, 43, 44, 45) herum eine geringere magnetische Leitfähigkeit aufweist als in einem Bereich, in welchem Bereich die jeweiligen wenigstens zwei Leiterstäbe (11a, 11b, 12a, 12b, 13a, 13b, 21a, 21b, 24a, 24b, 32a, 32b, 34a, 34b, 42) an ihm befestigt sind, oder welcher Bereich zu einer Kontaktierung mit einer energieübertragenden Bürste ausgebildet ist, wobei beide Bereiche nicht aus Kupfer gefertigt sind.

## Beschreibung

Die Erfindung betrifft einen Schleifringkörper zur elektrischen Kontaktierung einer Asynchronmaschine nach Anspruch 1. Außerdem betrifft die Erfindung eine elektrische Maschine, insbesondere Asynchronmaschine, mit einem Schleifringkörper nach Anspruch 8. Zudem betrifft die Erfindung eine Verwendung eines Schleifringkörpers zur elektrischen Kontaktierung einer Asynchronmaschine nach Anspruch 9.

Bei doppelt gespeisten Asynchronmaschinen wird im Rotor ein Drehstromsystem eingeprägt. Zur Stromübertragung wird ein Schleifringüberträger aus einem elektrisch und magnetisch leitfähigen Material, insbesondere Edelstahl, verwendet. Bei einem solchen Schleifringüberträger wird über stationäre Bürsten das Drehstromsystem auf Schleifringe und damit den rotierenden Teil der Maschine übertragen. Dabei muss das Drehstromsystem von den Schleifringen über entsprechende Leiterstäbe an die Läuferwicklung des Rotors geleitet werden.

Die mit dem Drehstrom durchflossenen Leiterstäbe induzieren dabei in benachbarten, magnetisch leitfähigen Materialien elektrische Wirbelströme, welche wiederum aufgrund ohmscher Verluste zu einer Erwärmung der jeweiligen Bauteile führen. Da die Temperatur der Bauteile materialbedingt bestimmte Werte nicht überschreiten darf, ist es bislang notwendig, für eine ausreichende Abfuhr der Wärmeverlustleistung und damit für eine Kühlung der betreffenden Bauteile zu sorgen.

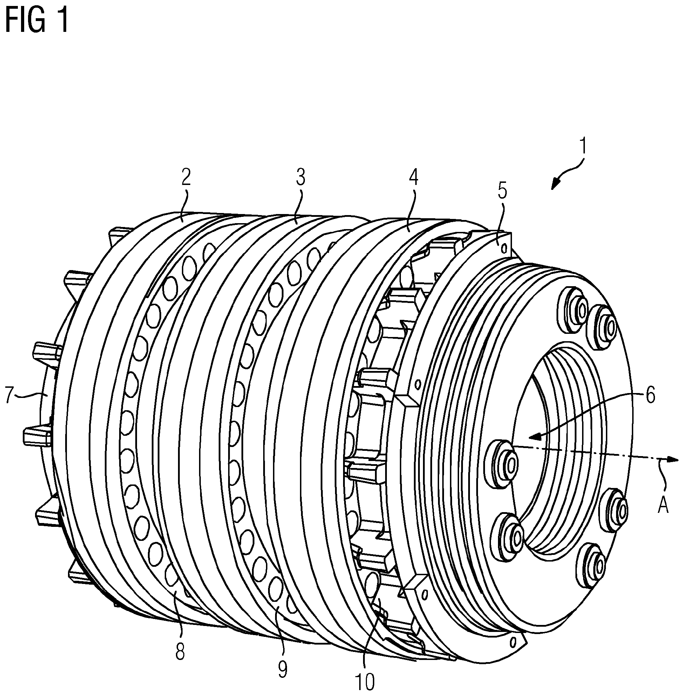

FIG 1 zeigt exemplarisch einen Schleifringkörper 1 gemäß dem Stand der Technik. Der Schleifringkörper umfasst drei Schleifringe 2, 3, 4 und einen Tragring 5. Die drei Schleifringe 2, 3, 4 sind entlang einer (gedachten) Drehachse A angeordnet und weisen eine radial innen liegende Ausnehmung auf, die als Nabe 6 dient. Innerhalb der Nabe 6 kann eine (nicht dargestellte) Rotorachse einer Asynchronmaschine geführt werden.

Die einzelnen Schleifringen 2, 3, 4 sind in axialer Richtung jeweils von Isolierkörpern 7, 8, 9, 10 umgeben, die die Schleifringkörper 2, 3, 4 gegeneinander elektrisch isolieren. An einem axialen Ende 11 des Schleifringkörpers 1 ist der Tragring 5 angeordnet, der mittels nicht dargestellte Verbindungsmittel (z.B. Bolzen) mit den einzelnen Schleifringen 2, 3, 4 und den Isolierkörpern 7, 8, 9, 10 verbunden ist, um dem Schleifringkörper 1 die nötige Stabilität zu verschaffen.

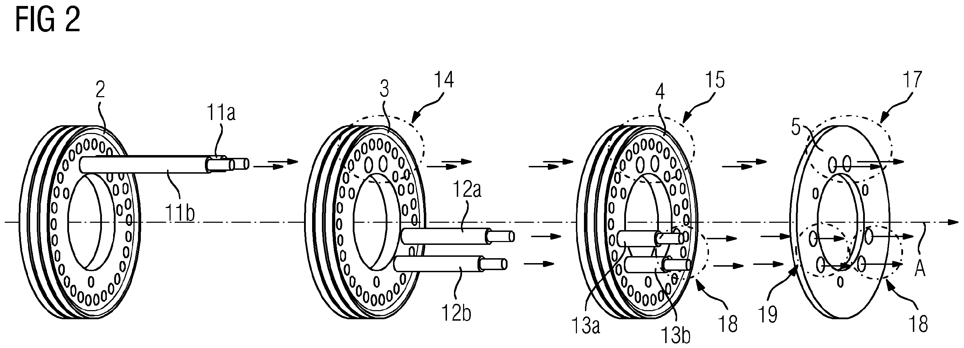

Die Entstehung der Verlustwärme wird anhand FIG 2 erläutert. Hier sind die drei Schleifringe 2, 3, 4 dargestellt, von denen jeweils zwei Leiterstäbe 11a, 11b, 12a, 12b, 13a, 13b in axialer Richtung von den Schleifringen 2, 3, 4 aus wegführen. Ausgehend von dem links in FIG 2 dargestellten Schleifring 2 führen die beiden dazugehörigen Leiterstäbe 11a, 11b in axialer Richtung A durch entsprechende (paarweise) Ausnehmungen 14 in dem in axialer Richtung in FIG 2 weiter rechts angeordneten Schleifring 3. Durch Wirbelstrominduzierungen kommt es im Bereich der Ausnehmung 14 zu Wärmeverlusten. Von dem zweiten Schleifring 3 aus verlaufen bereits vier Leiterstäbe 11a, 11b, 12a, 12b in Richtung des dritten Schleifrings 4. Dort sind sie durch entsprechende (paarweise) Ausnehmungen 15, 16 geführt und erzeugen dort wiederum Wärmeverluste. Durch den Tragring 5 werden sechs Leiterstäbe 11a, 11b, 12a, 12b, 13a, 13b geführt und erzeugen in drei (paarweisen) Ausnehmungen 17, 18, 19 eine dementsprechend hohe Verlustleistung.

Der ungefähre Verlauf der Leiterstäbe 11a, 11b, 12a, 12b, 13a, 13b ist aus Übersichtlichkeitsgründen in FIG 2 durch Pfeile angedeutet, der Bereich der Ausnehmungen 14, 15, 16, 17, 18, 19 ist durch elliptische Umrandungen gekennzeichnet.

Regelmäßig wird über jeden Schleifring 2, 3, 4 eine andere Phase des Drehstromsystems geführt.

Bisher ist es bekannt, die entstehenden Verluste über eine verbesserte Kühlwirkung zu kompensieren. Hierzu sind jedoch aufwändige Kühlkonzepte notwendig, die, abhängig von einer Leistung des zu versorgenden Motors, bis zu einer aktiven Fremdbelüftung des Schleifringkörpers reichen. Damit sind auf der einen Seite hohe Kosten und auf der anderen Seite hohe technische Anforderungen an das Wärmemanagement verbunden. Um die Entstehung der Wirbelstromverluste zu vermeiden bzw. diese zu verringern, können zudem Materialien wie Kupfer für die Schleifringe verwendet werden. Diese zeichnen sich durch eine vergleichsweise geringe magnetische Leitfähigkeit aus, was die Wirbelstromentstehung begrenzt. Die Kosten für Kupfer sind jedoch um Größenordnungen höher als die für Edelstahl, was derartige Lösungen wirtschaftlich wenig attraktiv macht.

Der Erfindung liegt die Aufgabe zugrunde, einen Schleifringkörper zur elektrischen Kontaktierung an eine Asynchronmaschine anzugeben, die die zuvor erläuterten Nachteile vermeidet und sich vor allem durch einen geringen Aufwand, sowohl aus technischer als auch aus finanzieller Sicht, auszeichnet.

Diese Aufgabe wird gelöst durch einen Schleifringkörper zur elektrischen Kontaktierung einer Asynchronmaschine nach Anspruch 1.

Der erfindungsgemäße Schleifringkörper umfasst wenigstens einen ersten Schleifring und einen zweiten Schleifring. An beiden Schleifringen sind jeweils wenigstens zwei Leiterstäbe befestigt. Die wenigstens zwei Schleifringe sind starr miteinander verbunden. Wenigstens einer der Schleifringe weist wenigstens eine Ausnehmung auf, die zu einer Durchführung der Leiterstäbe des wenigstens einen anderen Schleifrings ausgebildet ist. Mit anderen Worten ist der Schleifringkörper so ausgebildet, dass die Leiterstäbe, die an einem Schleifring befestigt sind, durch den anderen Schleifring hindurchführen. In umgekehrter Richtung ist dies nicht der Fall.

Der erfindungsgemäße Schleifringkörper ist dadurch gekennzeichnet, dass der wenigstens eine Schleifring, der die Ausnehmung (zur Durchführung der Leiterstäbe des anderen Schleifrings) aufweist, in einem Bereich um die Ausnehmung herum eine niedrigere magnetische Leitfähigkeit aufweist als in einem Bereich, in dem die jeweiligen wenigstens zwei Leiterstäbe an ihm befestigt sind, wobei beide Bereiche nicht aus Kupfer gefertigt sind.

Die Schleifringe weisen eine Ringform auf, d.h. sie sind innen hohl und weisen eine definierte Ringbreite auf. Sie dienen der Übertragung von elektrischer Energie eines statischen Versorgungssystems auf einen rotierenden Teil (Rotor) einer Asynchronmaschine. Die Übertragung findet dabei in der Regel mittels (Schleif-)Bürsten aus Kohle statt, die entlang einer Oberfläche der Schleifringe geführt werden und dabei elektrische Energie auf die Schleifringe übertragen.

Unter einem Leiterstab wird eine stabförmige, stromleitende Leitung verstanden, die beispielsweise in Form eines Zylinders ausgebildet sein kann. Üblicherweise sind die in Schleifringkörpern eingesetzten Leiterstäbe starr, damit sie sich bei einer Drehbewegung des Rotors der Asynchronmaschine nicht verwinden oder biegen können, um dadurch gegebenenfalls einen Kurzschluss zu verursachen. Die Leiterstäbe können, ohne sich hierauf zu beschränken, beispielsweise aus Kupfer sein.

Wie aus dem Stand der Technik bekannt, weist ein Schleifringkörper beispielsweise zwei Schleifringe auf, die voneinander beabstandet und mittels Isolatoren elektrisch voneinander getrennt sind. Zwei Leiterstäbe sind an einem der Schleifringe befestigt, zwei weitere Leiterstäbe an dem anderen der beiden Schleifringe. Alle vier Leiterstäbe verlaufen in dieselbe Richtung. Damit die ersten beiden Leiterstäbe den anderen Schleifring passieren können, weist dieser eine spezielle Ausnehmung bzw. Durchführung auf. Dabei handelt es sich im Stand der Technik in der Regel um Bohrlöcher, durch welche die Leiterstäbe geführt sind.

Wesentlich für die Erfindung ist, dass ein Bereich um die wenigstens eine Ausnehmung in wenigstens einem der Schleifringe herum eine im Verhältnis geringere magnetische Leitfähigkeit aufweist. Durch die geringe magnetische Leitfähigkeit (auch als magnetische Permeabilität bezeichnet) wird eine Intensität der um die stromdurchflossenen Leiterstäbe herum in den durchquerten Schleifringen induzierten Wirbelströme reduziert. Hierdurch können Wärmeverluste deutlich reduziert werden.

Das Verhältnis bezieht sich auf einen Bereich der Schleifringe, in dem an diesen jeweils die dazugehörigen Leiterstäbe befestigt sind. In diesem (Übergangs-)Bereich ist eine hohe elektrische Leitfähigkeit vonnöten, die in der Regel nur kostengünstig mit einem Material realisiert werden kann, das gleichfalls über eine hohe magnetische Leitfähigkeit verfügt. Regelmäßig wird deshalb Edelstahl als Material für die Schleifringe bzw. den (Übergangs-)Bereich der Schleifringe zwischen Schleifring und Leiterstab zum Einsatz kommen.

Wie bereits erwähnt, kommt im Stand der Technik auch Kupfer als Material für beide Bereiche (Befestigungsbereich und Durchführungsbereich der Leiterstäbe) zum Einsatz. Dieses ist aber um Größenordnungen teuer, weshalb die Erfindung eine Lösung für das oben genannte Problem beschreibt, die gerade in diesen Bereichen kein Kupfer zum Einsatz kommen lässt.

Im Rahmen einer Weiterbildung der Erfindung ist in dem Bereich um die Ausnehmung in dem Schleifring wenigstens teilweise Luft. Dabei wird mit dem Begriff "Luft" im Wesentlichen das natürliche Gasgemisch der Erde bezeichnet. Im Rahmen dieser Weiterbildung kann die Ausnehmung derart ausgedehnt sein, dass die von den Leiterstäben induzierten Wirbelströme deutlich geringer sind als bei den im Stand der Technik bekannten "Bohrlöchern", deren Öffnungsquerschnitt üblicherweise nur geringfügig größer ist als der der Leiterstäbe. Vorzugsweise ist eine Öffnungsquerschnittsfläche der Ausnehmung wenigstens doppelt so groß wie eine Querschnittsfläche der Leiterstäbe, besonders bevorzugt wenigstens viermal so groß.

Es kann aber auch eine Art "Luftspalt" in dem Bereich um die Ausnehmung herum vorhanden sein. Mit anderen Worten ist dabei die Ausnehmung für die Leiterstäbe in dem Schleifring nicht vollumfänglich geschlossen, sondern weist eine Unterbrechung auf, in der Luft ist. Dadurch erfahren die um die Leiterstäbe verlaufenen ringförmigen magnetischen Feldlinien eine Schwächung, was wiederum die Entstehung von Wirbelströmen und damit Verlustwärme verringert.

Alternativ kann die geringere magnetische Leitfähigkeit auch dadurch erzielt werden, dass ein Teil des Bereichs um die Ausnehmung herum ausgespart ist, d.h. Luft ist. Der verbleibende Teil des Schleifrings in diesem Bereich ist dabei mit einer geringeren Materialstärke realisiert, was die magnetisch Leitfähigkeit des betreffenden Bereichs in Summe gegenüber dem Bereich um die Befestigungen der Leiterstäbe herum, in dem der Schleifring eine volle Materialstärke aufweist, verringert.

Bevorzugt ist der Schleifringkörper dabei ringförmig ausgebildet weist einen äußeren Ringbereich mit einer höheren Materialstärke und einen inneren Ringbereich mit einer geringeren Materialstärke auf, wobei die wenigstens eine Ausnehmung in dem inneren Ringbereich angeordnet ist.

Im Zuge einer vorteilhaften Weiterbildung der Erfindung sind die Leiterstäbe in einem Bereich der Durchführung durch die wenigstens eine Ausnehmung in radialer Richtung von einem elektrisch isolierenden Material umgeben. Dabei ist wiederum das elektrisch isolierende Material von einem Material umgeben, das eine vergleichsweise hohe elektrische Leitfähigkeit aufweist. Das elektrisch gut leitende Material umgibt die Isolationsschicht und den eigentlichen Leiterstab dabei nach Art einer Hülse.

Durch die Verwendung eines elektrisch gut leitfähigen Materials wie beispielsweise Kupfer oder Aluminium werden in der Hülse Wirbelströme induziert, welche ein entgegen gerichtetes magnetisches Feld erzeugen und das magnetische Feld, welches von den stromdurchflossenen Leiterstäben erzeugt wird, einschließen (bzw. abschirmen). Der magnetische Fluss dringt somit nur in geringem Maße in das umliegende Schleifringmaterial ein und erzeugt dementsprechend geringere Wärmeverluste.

Besonders bevorzugt ist in einem radial inneren Bereich der Schleifringe eine Hülse angeordnet, die eine Nabe des Schleifringkörpers umgibt. Dabei weist die Hülse eine vergleichsweise hohe elektrische Leitfähigkeit auf, wobei die Hülse insbesondere aus Kupfer oder Aluminium gefertigt ist. Die Nabe selbst kann vorteilhafterweise aus einem Material mit einer vergleichsweise geringen magnetischen Leitfähigkeit sein. Für nähere Ausführungen hierzu sei auf die Beschreibung der Ausführungsbeispiele verwiesen.

Die Aufgabe wird außerdem gelöst durch eine elektrische Maschine, insbesondere Asynchronmaschine, mit einem Schleifringkörper gemäß den vorstehenden Erläuterungen.

Zudem wird die Aufgabe gelöst durch die Verwendung eines Schleifringkörpers gemäß den vorstehenden Erläuterungen. zur elektrischen Kontaktierung einer Asynchronmaschine.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispielr, die im Zusammenhang mit den Zeichnung näher erläutert werden. Es zeigen:
- FIG 1: einen Schleifringkörper gemäß dem Stand der Technik;
- FIG 2: die prinzipielle Entstehung von Verlustwärme in einem Schleifringkörper;
- FIG 3: einen erfindungsgemäßen Schleifringkörper gemäß einer ersten Ausführungsform;
- FIG 4: einen erfindungsgemäßen Schleifringkörper gemäß einer zweiten Ausführungsform;
- FIG 5: einen Tragring für den erfindungsgemäßen Schleifringkörper gemäß FIG 4;
- FIG 6: einen erfindungsgemäßen Schleifringkörper gemäß einer dritten Ausführungsform;
- FIG 7: einen erfindungsgemäßen Schleifringkörper gemäß einer vierten Ausführungsform;
- FIG 8: einen erfindungsgemäßen Schleifringkörper gemäß einer fünften Ausführungsform in einem Längsschnitt; und
- FIG 9: den Schleifringkörper gemäß FIG 8 in einem Querschnitt.

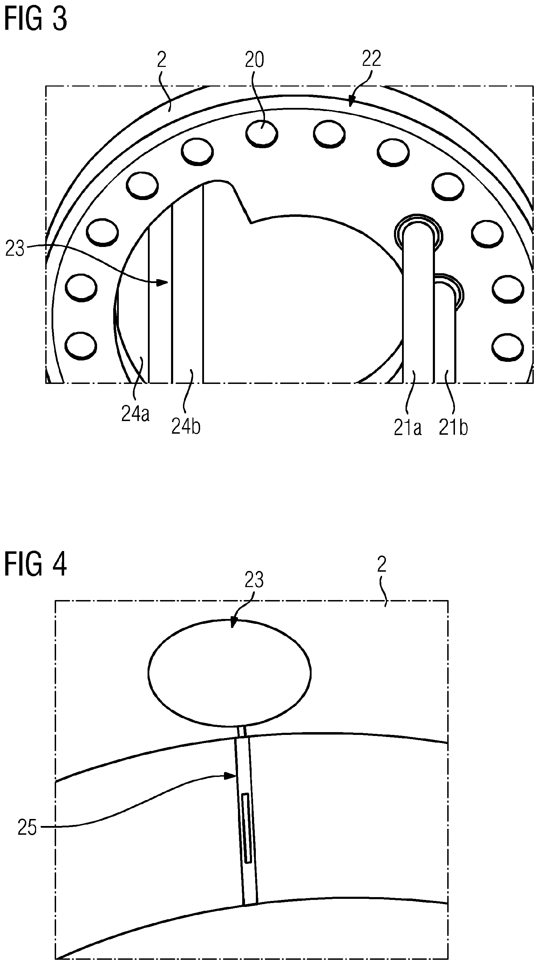

In FIG 3 ist ein Schleifring 2 eines erfindungsgemäßen Schleifringkörpers 1 in einer Schrägansicht dargestellt. Der Schleifring 2 ist als Hohlzylinder ausgebildet und weist über seinen Umfang verteilte Lüftungslöcher 20 auf, die zu einer passiven Entwärmung des Schleifrings 2 dienen, wenn der Schleifring 2 in Rotation versetzt wird.

An dem Schleifring 2 sind zwei Leiterstäbe 21a, 21b befestigt. Die Befestigung kann beispielsweise mittels einer Verschraubung oder einer Einpressung der Leiterstäbe 21a, 21b mit bzw. in dem Schleifring 2 umgesetzt sein. Die Leiterstäbe 21a, 21b dienen der Energieübertragung von einer Außenseite 22 des Schleifrings 2 zu einer nicht dargestellten elektrischen Maschine, insbesondere Asynchronmaschine. Die elektrisehe Energie wird mittels ebenfalls nicht dargestellter (Kohle-)Bürsten über die Außenseite 22 des Schleifrings 2 auf diesen übertragen. Der Schleifring 2 ist im vorliegenden Ausführungsbeispiel aus Edelstahl gefertigt.

In Umfangsrichtung versetzt zu den zwei Leiterstäben 21a, 21b weist der Schleifring 2 eine Ausnehmung 23 auf. Durch diese Ausnehmung 23 sind zwei weitere Leiterstäbe 24a, 24b geführt, die keinen Kontakt mit dem Schleifring 2, auch nicht mittels einer Hülse oder dergleichen, aufweisen. Eine Öffnungsquerschnittsfläche der Ausnehmung 23 ist mehr als doppelt so groß wie eine Querschnittsfläche der beiden weiteren Leiterstäbe 24a, 24b. Wie aus FIG 3 ersichtlich wird, befindet sich in dem Bereich der Ausnehmung 23 um die Leiterstäbe 24a, 24b herum gewöhnliche Luft, die eine vergleichsweise niedrige magnetische Leitfähigkeit aufweist. Hierdurch wird die Entstehung von Wirbelströmen um die durch die Ausnehmung 23 geführten Leiterstäbe 24a, 24b herum verringert, was geringere Wärmeverluste mit sich bringt.

FIG 4 zeigt eine alternative Ausführungsform eines Schleifrings 2 eines erfindungsgemäßen Schleifringkörpers 1. Der Schleifring 2 weist eine Ausnehmung 23 in Form eines "Bohrlochs" auf, deren Öffnungsquerschnittsfläche etwas größer ist als eine Querschnittsfläche der durch sie hindurchzuführenden Leiterstäbe. In einem Bereich um die Ausnehmung 23 herum weist der Schleifring 2 eine schlitzförmige Öffnung 25 auf. Diese unterbricht eine Wandung der Ausnehmung 23 und stellt an dieser Stelle eine lokale Verringerung der magnetischen Leitfähigkeit dar. Hierdurch werden die um die Leiterstäbe herum entstehenden magnetischen Feldlinien geschwächt, was wiederum die Wirbelstromverluste verringert.

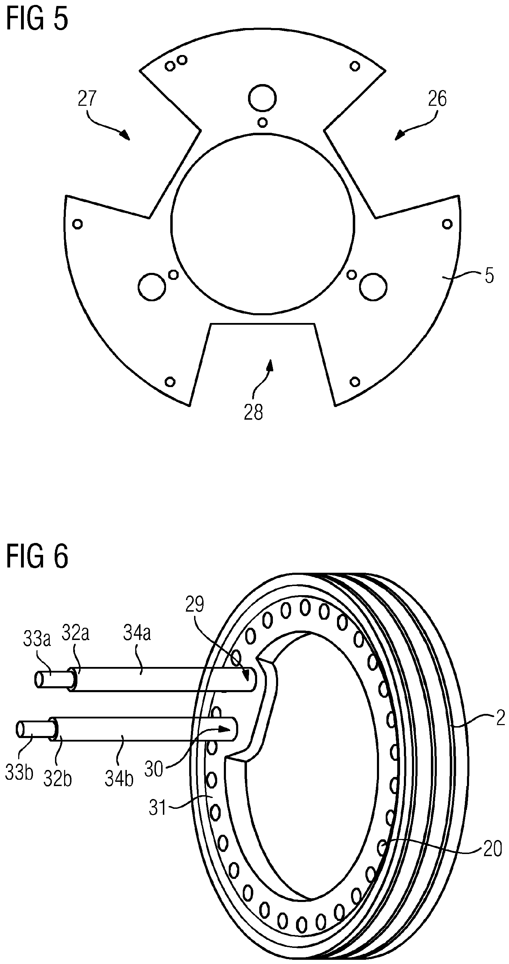

In FIG 5 ist ein Tragring 5 dargestellt, der beispielsweise in Kombination mit Schleifringen 2 gemäß den Figuren 3 und 4 in einem Schleifringkörper 1 verwendet werden kann. Der Tragring 2 weist drei Ausnehmungen 26, 27, 28 auf, die zu einem Außenumfang des ringförmigen Schleifrings 2 hin öffnen. Durch diese Ausnehmungen 26, 27, 28 hindurch können Leiterstäbe geführt werden, die aufgrund der verhältnismäßig großen Öffnungsquerschnittsfläche der Ausnehmungen 26, 27, 28 nur geringe Wirbelströme in dem Tragring 5 induzieren.

FIG 6 zeigt eine weitere alternative Ausführungsform eines Schleifrings 2 eines erfindungsgemäßen Schleifringkörpers 1. Der Schleifring 2 ist als Hohlzylinder ausgebildet und weist über seinen Umfang verteilte Lüftungslöcher 20 auf, die zu einer passiven Entwärmung des Schleifrings 2 dienen, wenn der Schleifring 2 in Rotation versetzt wird.

Der Schleifring 2 weist zwei Ausnehmungen 29, 30 auf, die an einem radial nach innen vorspringenden Teil 31 des Schleifrings angeordnet sind. Durch die beiden Ausnehmungen 29, 30 ist jeweils ein Leiterstab 32a, 32b geführt. Die Leiterstäbe 32a, 32b verfügen jeweils über einen innenliegenden elektrisch leitenden Kern (z.B. aus Kupfer) und eine außenliegende, umhüllende Isolierungsschicht, die den innenliegenden Kern umgibt. In einem Bereich um die Ausnehmungen 29, 30 bzw. den vorspringenden Teil 31 herum befindet sich kein Material, so dass hier die magnetische Leitfähigkeit stark verringert ist.

In dem Schleifringkörper 1 können mehrere Schleifringe 2 angeordnet sein, deren vorspringende Teile 31 gegeneinander in Umfangsrichtung verschoben sind. Damit lässt sich auf einfache Art und Weise ein ausreichender Abstand zwischen den (mehr als zwei) Leiterstäben 34a, 34b realisieren und verlustbehaftete (elektromagnetische) Interaktionen zwischen den Leiterstäben 34a, 34b vermeiden.

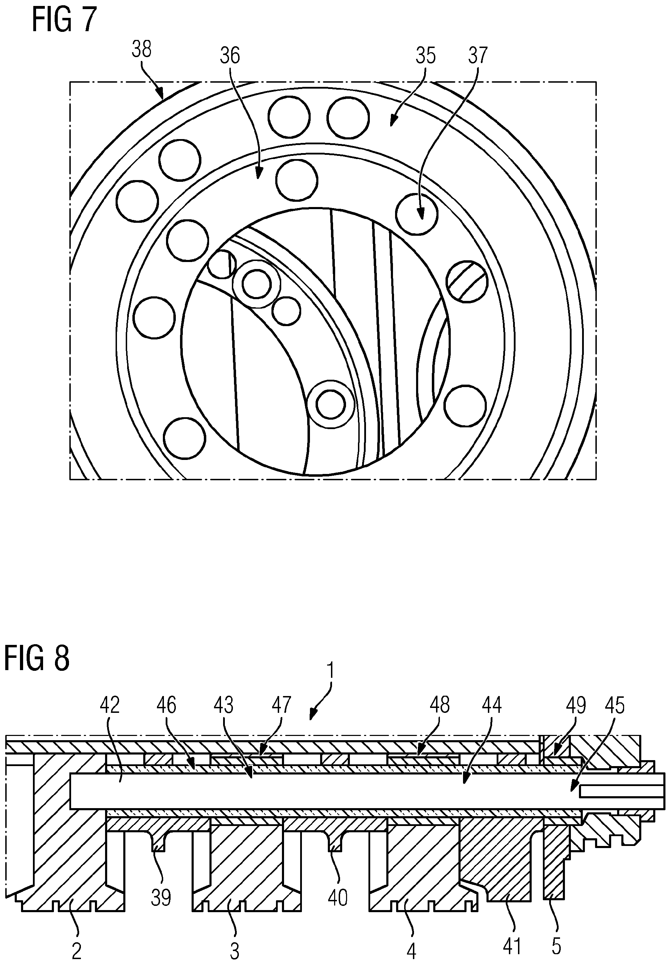

Ein weiteres Ausführungsbeispiel ist FIG 7 zu entnehmen. Hier ist ein Schleifring 2 in einer Frontansicht dargestellt. Der Schleifring 2 weist einen äußeren Ringbereich 35 und einen inneren Ringbereich 36 auf. Die beiden Ringbereiche 35, 36 sind in FIG 7 zur Veranschaulichung mittels einer gestrichelten Linie getrennt. In dem inneren Ringbereich 36 sind "bohrlochförmige" Ausnehmungen 37 zur Durchführung von Leiterstäben angeordnet. Bereiche des Schleifrings 2 um die jeweiligen Ausnehmungen herum weisen eine geringere magnetische Leitfähigkeit auf als in einem Außenbereich 38 des Schleifrings 2. Dies kann beispielsweise dadurch erreicht werden, dass eine Materialstärke des Schleifrings 2 in dem inneren Ringbereich 36 geringer ist als in dem äußeren Ringbereich 35. Alternativ oder zusätzlich kann für den inneren Ringbereich 35 ein Material verwendet werden, dass eine vergleichsweise geringe magnetische Leitfähigkeit aufweist. Beispielsweise kann der äußere Ringbereich 35 aus Edelstahl und der innere Ringbereich 36 aus Aluminium oder Kupfer sein.

FIG 8 zeigt eine weitere Ausführungsform eines erfindungsgemäßen Schleifringkörpers 1 in einem Längsschnitt. Der Schleifringkörper 1 weist einen ersten Schleifring 2, einen zweiten Schleifring 3, einen dritten Schleifring 4 und einen Tragring 5 (in FIG 8 von links nach rechts gesehen) auf. Zwischen den Schleifringen 2, 3, 4 sind Isolatoren 39, 40, 41 angebracht, um die Schleifringe 2, 3, 4 elektrisch voneinander zu isolieren.

An dem ersten Schleifring 2 sind zwei Leiterstäbe 42 befestigt, von denen nur einer in FIG 8 zu erkennen ist. Der Leiterstab 42 erstreckt sich von dem ersten Schleifring 2 ausgehend in axialer Richtung durch entsprechende Ausnehmungen 43, 44, 45 in den beiden anderen Schleifringen 3, 4 und dem Tragring 5 hindurch. Um die Leiterstäbe 42 ist eine Isolationsschicht 46 gehüllt, die die Leiterstäbe 42 elektrisch von den umgebenden Teilen des Schleifringkörpers 1, insbesondere den Schleifringen 3, 4 und dem Tragring 5, trennt. Im Bereich der Ausnehmungen 43, 44, 45 ist die Isolationsschicht 46 von Hülsen 47, 48, 49 umgeben, die aus einem Material mit hoher elektrischer, aber niedriger magnetischer Leitfähigkeit bestehen, insbesondere aus Aluminium. In diesen Hülsen 47, 48, 49 wird ein elektrischer Strom induziert, der wiederum ein ihn umgebendes magnetisches Feld erzeugt, welches das Magnetfeld um die stromdurchflossenen Leiterstäbe 42 schwächen bzw. abschirmen kann.

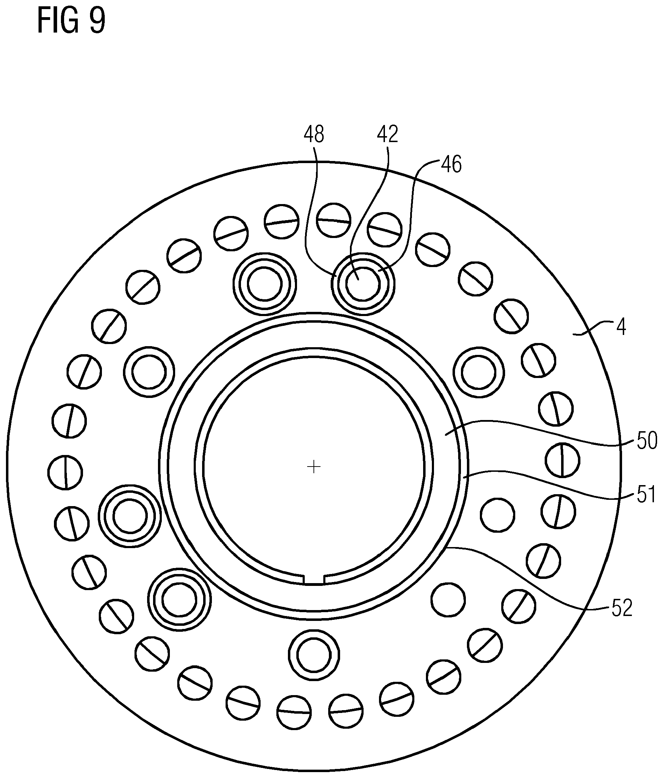

FIG 9 zeigt eine Frontansicht des Schleifrings 4 gemäß FIG 8. In einem inneren Randbereich des Schleifrings 4 ist eine ringförmige Nabe 50 angeordnet, die aus einem Material mit einer geringen magnetischen Leitfähigkeit besteht. Um die Nabe 50 herum ist eine (elektrische) Isolationsschicht 51 angeordnet. Diese Isolationsschicht 51 ist von einer Hülse 52 umgeben, die aus einem Material mit guter elektrischer, aber geringer magnetischer Leitfähigkeit besteht. Durch diese Ausbildung des Schleifrings 4, die natürlich nicht auf diesen einen Schleifring 4 beschränkt ist, werden die anhand FIG 8 erläuterten Vorteile weiter verstärkt.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Schleifringkörper (1) zur elektrischen Kontaktierung einer Asynchronmaschine, umfassend wenigstens einen ersten Schleifring (2) und einen zweiten Schleifring (3), an denen jeweils wenigstens zwei Leiterstäbe (11a, 11b, 12a, 12b, 13a, 13b, 21a, 21b, 24a, 24b, 32a, 32b, 34a, 34b, 42) befestigt sind, wobei die wenigstens zwei Schleifringe (2, 3) starr miteinander verbunden sind, und wobei wenigstens einer der Schleifringe (2, 3) wenigstens eine Schleifring (14, 15, 16, 17, 18, 19) aufweist, die zu einer Durchführung der Leiterstäbe (11a, 11b, 12a, 12b, 13a, 13b, 21a, 21b, 24a, 24b, 32a, 32b, 34a, 34b, 42) des wenigstens einen anderen Schleifrings (2, 3) ausgebildet ist,
**dadurch gekennzeichnet, dass**
der wenigstens eine Schleifring (2, 3), der die wenigstens eine Ausnehmung (14, 15, 16, 17, 18, 19, 23, 26, 27, 28, 29, 30, 37, 43, 44, 45) aufweist, in einem Bereich um die Ausnehmung (14, 15, 16, 17, 18, 19, 23, 26, 27, 28, 29, 30, 37, 43, 44, 45) herum eine geringere magnetische Leitfähigkeit aufweist als in einem Bereich, in welchem Bereich die jeweiligen wenigstens zwei Leiterstäbe (11a, 11b, 12a, 12b, 13a, 13b, 21a, 21b, 24a, 24b, 32a, 32b, 34a, 34b, 42) an ihm befestigt sind, oder welcher Bereich zu einer Kontaktierung mit einer energieübertragenden Bürste ausgebildet ist, wobei beide Bereiche nicht aus Kupfer gefertigt sind.

2. Schleifringkörper (1) nach Anspruch 1, bei dem in dem Bereich um die Ausnehmung (14, 15, 16, 17, 18, 19, 23, 26, 27, 28, 29, 30, 37, 43, 44, 45) herum wenigstens teilweise Luft ist, wobei eine Öffnungsquerschnittsfläche der Ausnehmung (14, 15, 16, 17, 18, 19, 23, 26, 27, 28, 29, 30, 37, 43, 44, 45) vorzugsweise wenigstens doppelt so groß ist wie eine Querschnittsfläche der Leiterstäbe 11a, 11b, 12a, 12b, 13a, 13b, 21a, 21b, 24a, 24b, 32a, 32b, 34a, 34b, 42, besonders bevorzugt wenigstens viermal so groß.

3. Schleifringkörper (1) nach Anspruch 1, bei dem in dem Bereich um die Ausnehmung (14, 15, 16, 17, 18, 19, 23, 26, 27, 28, 29, 30, 37, 43, 44, 45) eine Materialstärke des Schleifrings (2, 3), der die Ausnehmung (14, 15, 16, 17, 18, 19, 23, 26, 27, 28, 29, 30, 37, 43, 44, 45) aufweist, geringer ist als in anderen Bereichen des Schleifrings (2, 3).

4. Schleifringkörper (1) nach Anspruch 3, der ringförmig ausgebildet ist und einen äußeren Ringbereich (35) mit einer höheren Materialstärke und einen inneren Ringbereich (36) mit einer geringeren Materialstärke aufweist, wobei die wenigstens eine Ausnehmung (14, 15, 16, 17, 18, 19, 23, 26, 27, 28, 29, 30, 37, 43, 44, 45) in dem inneren Ringbereich (36) angeordnet ist.

5. Schleifringkörper (1) nach einem der Ansprüche 1 oder 3 bis 4, bei dem die Leiterstäbe (11a, 11b, 12a, 12b, 13a, 13b, 21a, 21b, 24a, 24b, 32a, 32b, 34a, 34b, 42) in einem Bereich der Durchführung durch die wenigstens eine Ausnehmung (14, 15, 16, 17, 18, 19, 23, 26, 27, 28, 29, 30, 37, 43, 44, 45) in radialer Richtung von einem elektrisch isolierenden Material umgeben sind, wobei das elektrisch isolierende Material von einem Material umgeben ist, das eine vergleichsweise hohe elektrische Leitfähigkeit aufweist.

6. Schleifringkörper (1) nach einem der Ansprüche 1 oder 3 bis 5, bei dem in einem radial inneren Bereich der Schleifringe (2, 3, 4) eine Hülse (52) angeordnet ist, die eine Nabe (50) des Schleifringkörpers (1) umgibt, wobei die Hülse (52) eine vergleichsweise hohe elektrische Leitfähigkeit aufweist, wobei die Hülse (42) insbesondere aus Aluminium gefertigt ist.

7. Schleifringkörper (1) nach Anspruch 6, bei dem die Nabe (50) aus einem Material besteht, das eine vergleichsweise geringe magnetische Leitfähigkeit aufweist.

8. Elektrische Maschine, insbesondere Asynchronmaschine, mit einem Schleifringkörper (1) nach einem der Ansprüche 1 bis 7.

9. Verwendung eines Schleifringkörpers (1) nach einem der Ansprüche 1 bis 7 zur elektrischen Kontaktierung einer Asynchronmaschine.
